# FASCICULE DE BREVET EUROPEEN

(11) **EP 2 006 148 B1**
(45) Date de publication et mention de la délivrance du brevet: **12.08.2015**
(21) Numéro de dépôt: 08158702.4
(22) Date de dépôt: 20.06.2008
(51) Int. Cl.: B60K 15/04, F16L 55/115

(54) **Agencement pour le verrouillage sur un conduit d'un bouchon comportant un bras d'immobilisation**
Anordnung zum Verschließen eines Kanals mit Hilfe eines Pfropfens und eines Absperrarms
Arrangement for blocking a plug comprising an immobilisation arm on a conduit

(30) Priorité: 20.06.2007 FR 0755899
(43) Date de publication de la demande: 24.12.2008
(73) Titulaire: Serv Trayvou Interverrouillage, 93100 Montreuil (FR)
(72) Inventeur: Duchesne, Frédéric, 95740 Frepillon (FR); Prat, Jean-Marie, 94700 Maison Alfort (FR)
(74) Mandataire: Gevers France

(56) Documents cités:
- DE-A1- 3 830 476
- DE-U1- 8 620 003
- DE-U1- 20 018 237
- FR-A- 796 050
- US-A- 1 689 979
- US-A- 1 747 201
- US-A- 1 747 204
- US-A- 1 944 535
- US-B1- 6 843 108

## Description

L'invention se rapporte à un agencement pour le verrouillage d'un bouchon dans une position axiale de bouchage d'une bouche d'extrémité avant de sortie d'un conduit axial.

Certaines industries utilisent des réservoirs ou des silos de stockage pour des matériaux fluides tels que de l'eau, de l'azote, du chlore ou des gaz, ou encore pour des marchandises pulvérulentes telles que des céréales, des granulés, du sable, du ciment ou encore des matières plastique. Ces réservoirs sont équipés de conduits d'accès comportant une bouche à laquelle des tuyaux d'alimentation sont susceptibles d'être raccordés. Les tuyaux d'alimentation.

Il est nécessaire, pour des raisons de sécurité, de maîtriser le raccordement à la bouche des conduits d'accès aux réservoirs ou aux silos de stockage. En effet, une erreur de manipulation lors de ces transferts peut entraîner le mélange de deux produits dans un même réservoir ou silo et donc la perte de l'ensemble de la marchandise ainsi que la nécessité de purger le silo ou le réservoir. Certains mélanges peuvent aussi être explosifs et mettre en danger la vie des employés.

Il est donc connu d'équiper ces conduits d'accès de moyens de verrouillage qui permettent de maîtriser le raccordement à ces conduits.

Ainsi, il est connu d'agencer un bouchon dans une position de bouchage pour obstruer la bouche du conduit d'accès. Le bouchon est verrouillé dans sa position de bouchage par un cadenas qui peut être actionné à l'aide d'une clé de bouchon associée.

Un tel dispositif de verrouillage permet de s'assurer que l'entreprise qui vient livrer la marchandise déversera son contenu dans le bon silo. Chaque silo doit être équipé d'un cadenas de verrouillage du bouchon dont la clé de bouchon est consignée sur un tableau de consigne géré par la personne responsable des silos.

La procédure suivante est appliquée de manière à garantir que le livreur se raccorde au bon conduit. Pour pouvoir se raccorder à un silo, le livreur doit préalablement venir récupérer la clé auprès des services concernés qui la lui délivrent en lui indiquant le numéro du silo correspondant. Ce numéro est généralement noté sur la clé en guise de codage.

Le cadenas associé de chaque silo dispose d'une clé à codage unique et le raccordement du tuyau d'alimentation au conduit d'accès n'est possible que lorsque le bouchon est déverrouillé et retiré. Ainsi, il est impossible qu'un livreur puisse se tromper de silo.

Une fois le transfert vers le silo terminé, le livreur décroche le tuyau d'alimentation, puis il interdit le raccordement au conduit d'accès en verrouillant le bouchon dans sa position de bouchage au moyen du cadenas. Il rapporte la clé de bouchon à la personne responsable pour une nouvelle consignation. Les clés de bouchon peuvent être consignées sur un tableau échangeur de clé.

Cependant, le cadenas peut être refermé sans que le bouchon ne soit dans sa position de bouchage. Ainsi, le fait de ranger la clé de bouchon sur le tableau de consigne après son utilisation ne garantit pas que le bouchon soit bien verrouillé dans sa position de bouchage.

Les documents US-A-1.747.201 et DE-U1-200.18.237 proposent des solutions similaires à celle du cadenas mettant en oeuvre un bras de blocage du bouchon ou un couvercle de recouvrement du bouchon. Cependant, ces documents ne proposent pas de solution permettant de garantir que le bouchon est verrouillé dans sa position de bouchage lorsque la clé de verrouillage du bras ou du couvercle est consignée. La clé de verrouillage du bras ou du couvercle peut en effet être retirée quelle que soit la position du bras ou du couvercle.

Le document US-B1-60843.108 propose de verrouiller le bouchon en position de bouchage à l'aide d'une vis auto-taraudeuse qui traverse un bras solidaire du bouchon et la paroi du conduit. Outre le fait que cette solution ne permet pas à une personne responsable de garantir la fermeture du conduit sans contrôle de visu, elle est aussi susceptible d'endommager le conduit. Un autre exemple connu est divulgué dans document US 1689979 A1.

Pour résoudre notamment ce problème, l'invention propose un agencement du type décrit précédemment, caractérisé en ce qu'il comporte :
- un premier verrou de loquet qui est fixe par rapport au conduit et qui comporte une face d'insertion ajourée d'un trou de serrure associé ;
- une clé de loquet qui est susceptible d'être insérée dans le trou de serrure du verrou de loquet pour être pivotée entre une position angulaire d'insertion dans laquelle la clé de loquet est susceptible d'être extraite du trou de serrure, et une position angulaire d'emprisonnement dans laquelle la clé de loquet est prisonnière dans le trou de serrure ;
- un bras rigide qui comporte un premier tronçon dans lequel la clé de loquet est montée pivotante autour de son axe, et qui comporte un deuxième tronçon qui porte le bouchon,
et en ce que le bouchon est immobilisé dans sa position de bouchage par le bras rigide lorsque la clé de loquet est dans sa position angulaire d'emprisonnement.

Selon d'autres caractéristiques de l'invention :
- le bras rigide comporte des moyens de détrompage de manière que la clé de loquet soit susceptible d'être insérée dans le trou de serrure uniquement lorsque le bouchon est dans sa position de bouchage par rapport au conduit ;
- le bras rigide présente une zone de détrompage qui est conformée de manière à être emboîtée avec une zone de forme complémentaire fixe par rapport au conduit uniquement lorsque le bouchon occupe sa position axiale de bouchage ;
- la clé de loquet est susceptible d'être insérée dans le trou de serrure uniquement lorsqu'une face d'appui du premier tronçon est en appui plan sur la face d'insertion du premier verrou de loquet ;
- le boîtier est délimité transversalement par rapport à l'axe d'insertion de la clé de loquet par une face proximale latérale et une face distale latérale, et en ce que le premier tronçon du bras rigide comporte une nervure qui s'étend perpendiculairement à la face d'insertion du boîtier de manière que, en position axiale de bouchage du bouchon, la nervure soit transversalement en appui contre la face latérale proximale, et de manière que dans une autre position angulaire du bouchon autour de l'axe de clé, une crête de la nervure bute contre la face d'insertion du boîtier pour empêcher que la face d'appui du premier tronçon soit en appui contre la face d'insertion du boîtier ;
- la face d'insertion du boîtier comporte au moins une saillie qui borde partiellement le trou de serrure et qui épouse sensiblement le contour du premier tronçon de manière que la face d'appui du premier tronçon soit susceptible d'être en appui contre la face d'insertion du boîtier uniquement lorsque le bouchon est dans sa position axiale de bouchage, et de manière que dans une autre position angulaire du bouchon autour de l'axe de clé, la saillie soit en contact avec la face d'appui du premier tronçon pour empêcher que la face d'appui du premier tronçon soit en appui contre la face d'insertion du boîtier ;
- l'agencement comporte un deuxième verrou d'inter-verrouillage qui est susceptible d'être actionné entre un premier état d'interverrouillage dans lequel la clé de loquet du premier verrou de loquet est bloquée dans sa position angulaire d'emprisonnement, et un deuxième état d'autorisation dans lequel la clé de loquet du premier verrou de loquet est libre d'être pivotée en ses deux positions angulaires ;
- la bouche du conduit est équipée d'un raccord symétrique, notamment du type raccord Guillemin, le bouchon comportant des moyens de serrage axial à baïonnettes sur le raccord symétrique de la bouche par pivotement du bouchon en position axiale de bouchage autour d'un axe de serrage entre une position angulaire d'emboîtement et une position angulaire de serrage ;
- le bouchon est monté pivotant sur le bras rigide autour de son axe de serrage de manière à permettre la fixation à baïonnette du bouchon sur le conduit lorsque le bras rigide est immobilisé ;
- la bouche du conduit est équipée de moyens de raccord symétrique, notamment du type raccord Guillemin, comprenant une bague de serrage qui est destinée à coopérer avec des oreilles latérales du bouchon pour le serrer axialement contre la bouche par pivotement de la bague autour d'un axe de serrage depuis une position angulaire d'insertion jusqu'à une position angulaire de serrage ;
- le premier verrou de loquet comporte un pêne de loquet qui est mobile en translation entre une position de verrouillage lorsque la clé de loquet est dans sa position angulaire d'emprisonnement et dans laquelle le pêne de loquet est susceptible de limiter le pivotement de la bague de serrage lorsqu'elle est en position de serrage, et une position de déverrouillage lorsque la clé de loquet est dans sa position d'insertion et dans laquelle la bague de serrage est libre d'être pivotée ;
- la bague de serrage comporte une collerette de blocage du pêne de loquet qui est agencée en vis-à-vis du pêne de loquet lorsque le bouchon est dans une position angulaire d'emboîtement afin d'empêcher le pivotement de la clé vers sa position angulaire d'emprisonnement tant que la bague de serrage n'est pas dans sa position angulaire de serrage ;
- la face d'insertion du premier verrou de loquet s'étend parallèlement à un plan tangentiel au conduit ;
- la face d'insertion du premier verrou de loquet s'étend radialement par rapport à l'axe du conduit.

D'autres caractéristiques et avantages apparaîtront au cours de la lecture de la description détaillée qui va suivre pour la compréhension de laquelle on se reportera aux dessins annexés parmi lesquels :
- la figure 1 est une vue en perspective éclatée qui représente un tronçon d'extrémité d'un conduit qui est équipé de d'un raccord symétrique et qui représente un bouchon équipé d'un bras d'immobilisation selon les enseignements de l'invention qui est destiné à être verrouillé dans une position de bouchage de la bouche du conduit par l'intermédiaire d'une clé de loquet ;
- la figure 2 est une vue de dessus qui représente le conduit de la figure 1, le bouchon associé étant verrouillé dans sa position de bouchage ;
- la figure 3 est une vue en section transversale selon le plan de coupe 3-3 de la figure 2 ;
- la figure 4 est une vue en perspective qui représente le bouchon de la figure 1 équipé d'un bras d'immobilisation selon les enseignements de l'invention sur lequel la clé de loquet est montée coulissante verticalement ;
- la figure 5 est une vue en coupe axiale du bouchon et du bras de la figure 4 dans laquelle la clé de loquet est dans une position supérieure d'extraction ;
- la figure 6 est une vue similaire à celle de la figure 5 dans laquelle la clé de loquet est dans une position inférieure d'insertion ;
- la figure 7 est une vue en perspective qui représente un conduit qui est équipé d'un bouchon réalisé selon un deuxième mode de réalisation de l'invention.
- la figure 8 est une vue en perspective éclatée qui représente un conduit qui est équipé d'un bouchon réalisé selon un deuxième mode de réalisation de l'invention dans lequel le verrou de loquet comporte un pêne de loquet ;
- la figure 9 est une vue en perspective du conduit de la figure 8 dans laquelle le pêne de loquet est dans une position arrière de déverrouillage ;
- la figure 10 est une vue similaire à celle de la figure 8 dans laquelle le pêne de loquet est dans une position avant de verrouillage d'une bague de serrage du conduit.

Pour la suite de la description on adoptera de manière non limitative des orientations axiale dirigée d'arrière en avant selon l'axe principal du conduit, transversale dirigée de gauche à droite et verticale dirigée de bas en haut, comme indiquées par le trièdre "A,V,T" des figures.

En outre, on adoptera aussi des orientations radiales qui sont orthogonales et sécantes avec l'axe "C" du conduit 10 et qui sont dirigées de l'intérieur vers l'extérieur par rapport à l'axe "C" du conduit 10.

Pour la suite de la description, des éléments ayant des fonctions identiques, analogues ou similaires seront désignés par des mêmes numéros de référence.

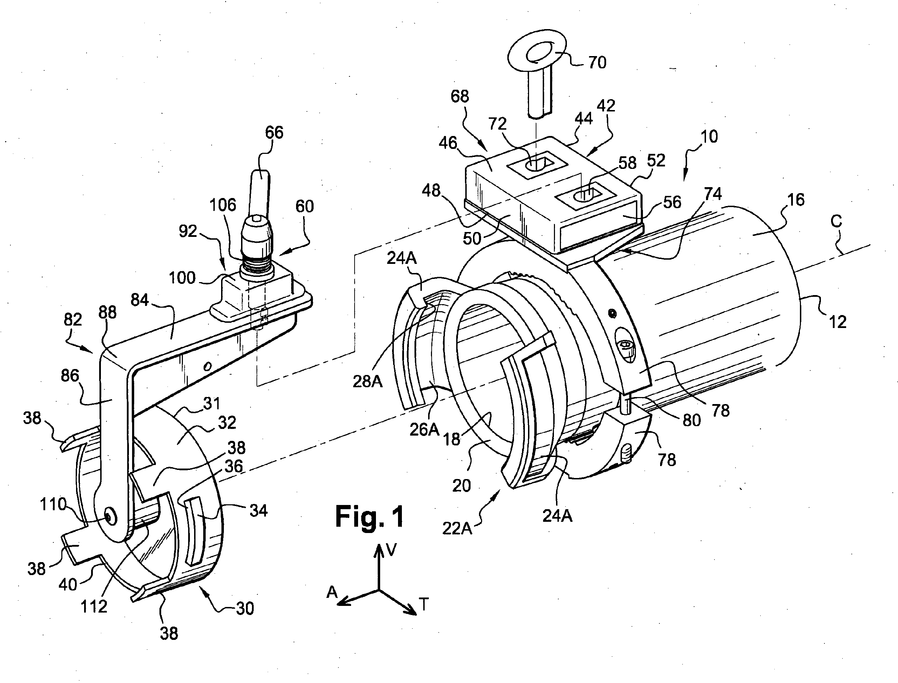

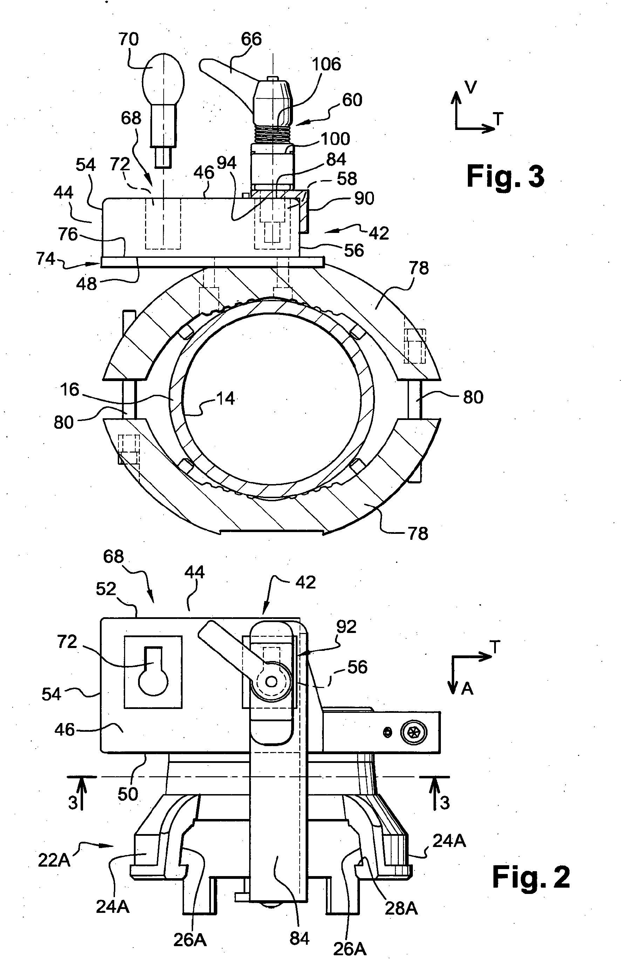

On a représenté à la figure 1 un tronçon d'extrémité libre avant d'un conduit 10 d'accès qui est destiné à être raccordé par son extrémité arrière 12 à un réservoir (non représenté). Le tronçon d'extrémité libre du conduit 10 présente une forme tubulaire globalement cylindrique de révolution d'axe principal rectiligne "C" d'orientation axiale, et il est délimité radialement vers l'intérieur par une face cylindrique intérieure 14 et radialement vers l'extérieur par une face cylindrique extérieure 16, comme illustré à la figure 3.

Pour simplifier la description, le tronçon d'extrémité avant libre du conduit 10 d'accès sera désigné "le conduit" 10 par la suite.

Le conduit 10 est réalisé en un matériau rigide tel que de la fonte ou de l'acier.

Le conduit 10 comporte une bouche 18 d'extrémité avant qui s'étend dans un plan transversal perpendiculaire à l'axe principal "C" du conduit 10 et qui est délimitée radialement par un bord 20 transversal circulaire.

Le conduit 10 est équipé de moyens de raccordement formé par un raccord symétrique 22A, notamment du type raccord Guillemin, sur lequel un raccord symétrique complémentaire (non représenté) d'un tuyau d'alimentation (non représenté) est susceptible d'être emboîté axialement pour assurer le raccordement du tuyau d'alimentation avec le conduit 10. Le raccord symétrique 22A et le raccord symétrique complémentaire ont une apparence identique, d'où le qualificatif "symétrique".

Pour la suite de la description, les références à des éléments du raccord symétrique 22A du conduit 10 seront suivies de la lettre "A".

Le raccord symétrique 22A du conduit 10 comporte deux oreilles latérales 24A opposées qui s'étendent symétriquement de part et d'autre de la bouche 18 du conduit 10 par rapport à un plan axial vertical passant par l'axe "C" du conduit 10. Chaque oreille latérale 24A s'étend sur un quart de tour en saillie radialement et vers l'avant par rapport au bord 20 de la bouche 18 en formant un secteur de tube coaxial à l'axe "C". Chaque oreille 24A présente un profil radial en forme de crochet qui délimite une rainure 26A circonférentielle en quart de cercle qui est ouverte radialement vers l'axe "C" du conduit 10. La rainure 26A est ainsi délimitée vers l'avant par une face radiale avant 28A.

Les oreilles 24A sont espacées de manière à permettre le passage axial du tuyau d'alimentation de même diamètre extérieur que celui de la bouche 18 du conduit 10 jusqu'au bord 20 de la bouche 18 du conduit 10.

Afin de permettre une fermeture étanche de la bouche 18 du conduit 10 d'accès lorsque ce dernier n'est pas utilisé, il est connu d'utiliser un bouchon 30. Le bouchon 30 présent une forme de disque plein qui s'étend dans un plan transversal et qui comporte une face circulaire d'extrémité arrière 31 présentant le même diamètre extérieur que celui de la bouche 18. Une jupe 32 cylindrique s'étend axialement vers l'avant depuis la circonférence du bouchon 30.

La face arrière 31 du bouchon 30 peut comporter un joint circulaire d'étanchéité (non représenté) de même diamètre que le bord 20 de la bouche 18 et qui fait saillie axialement vers l'arrière.

Le bouchon 30 comporte deux doigts 34 opposés qui s'étendent radialement vers l'extérieur depuis la face cylindrique extérieure de la jupe 32. Chaque doigt 34 s'étend circonférentiellement au plus sur un quart de tour du bouchon 30.

Chaque doigt 34 présente une face radiale avant 36 qui forme une rampe inclinée (non représentée) par rapport à un plan radial de manière qu'en tournant le bouchon 30 autour de l'axe "C" dans un sens horaire, l'extrémité aval soit agencée axialement vers l'avant par rapport à l'extrémité amont de la face radiale avant 36.

Les doigts 34 forment ainsi des moyens de serrage axial à baïonnettes du bouchon 30 sur le raccord symétrique 22A du conduit 10.

En outre, le bouchon 30 comporte quatre pattes 38 axiales qui s'étendent axialement en saillie depuis le bord d'extrémité avant 40 de la jupe 32 du bouchon 30. Les quatre pattes 38 sont réparties régulièrement autour de la jupe 32.

Le bouchon 30 peut être installé sur le conduit 10 d'accès de la manière suivante. La face arrière 31 du bouchon 30 est agencé coaxialement à la bouche 18 et en avant, en occupant une position angulaire d'emboîtement dans laquelle les doigts 34 opposés soient agencés circonférentiellement entre les deux oreilles 24A du raccord symétrique 22A du conduit 10. Puis, la face arrière 31 du bouchon 30 est plaquée axialement vers l'arrière contre le bord 20 de la bouche 18 dans une position axiale de bouchage. Dans cette position, les déplacements verticaux et transversaux du bouchon 30 sont sensiblement bloqués par les oreilles 24A du raccord symétrique 22A.

Ensuite, le bouchon 30 est pivoté d'un quart de tour dans un sens horaire autour d'un axe de serrage coaxial à l'axe "C" du conduit 10 dans une position angulaire de serrage dans laquelle les doigts 34 soient engagés dans les rainures 26A des oreilles 24A du raccord symétrique 22A du conduit 10. Lors du pivotement du bouchon 30, les doigts 34 s'engagent dans les rainures 26A des oreilles 24A du conduit 10. Les rampes formées par la face radiale avant 36 des doigts 34 entrent en contact avec la face avant 28A des rainures 26A de manière à serrer axialement la face arrière 31 du bouchon 30 contre le bord 20 de la bouche 18 en comprimant le joint d'étanchéité. Le conduit 10 est ainsi bouché de manière étanche par le bouchon 30.

Afin de s'assurer que le bouchon 30 ne peut être retiré que par des personnes autorisées, le conduit 10 comporte un agencement pour le verrouillage du bouchon 30 dans sa position de bouchage.

À cet effet, le conduit 10 comporte un premier verrou de loquet 42 qui est fixe par rapport au conduit 10. Dans l'exemple représenté aux figures 1 à 3, le verrou de loquet 42 comporte un boîtier 44 de forme parallélépipédique rectangle. Le boîtier 44 comporte ainsi une face horizontale supérieure 46 et une face horizontale inférieure 48. Le boîtier 44 comporte aussi deux faces transversales d'extrémité axiale avant 50 et arrière 52 et deux faces verticales latérales gauche 54 et droite 56.

La face supérieure 44 comporte un premier trou de serrure 58 dans lequel une clé mécanique associée 60 dite de loquet est destinée à être insérée verticalement. La face supérieure 44 sera donc dite "face d'insertion" 44.

Le trou de serrure 58 est agencé de façon excentrée dans la face supérieure d'insertion 46 du boîtier 44 de manière que la face latérale droite 56 soit proximale et de manière que la face latérale gauche 54 soit distale, mais aussi de manière que la distance transversale entre le trou de serrure 58 soit inférieure à la distance axiale entre le trou de serrure 58 et chacune des faces avant 50 et arrière 52 du boîtier 44.

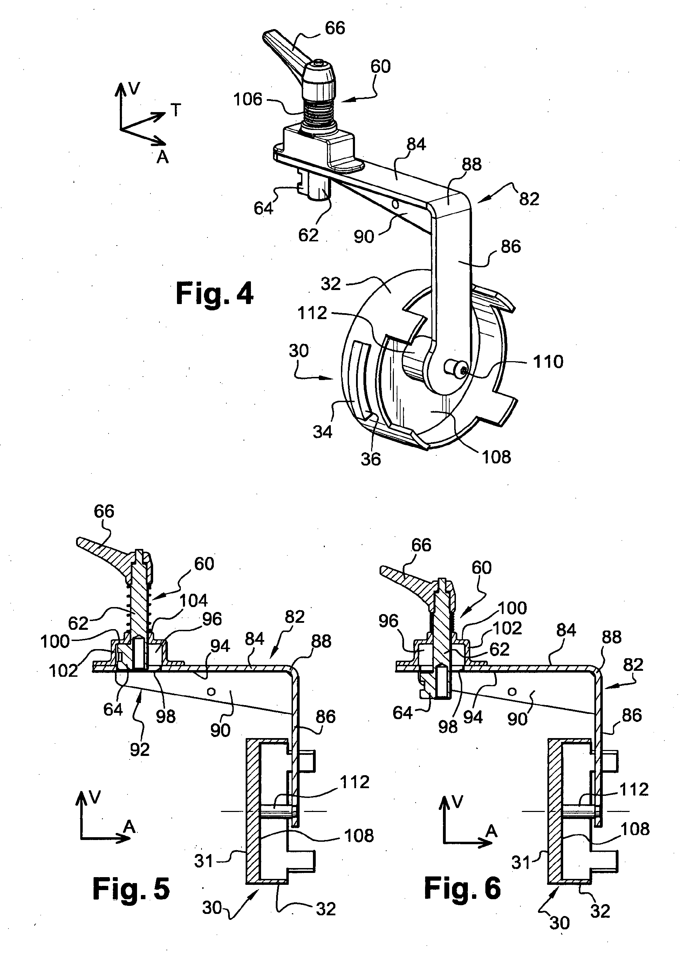

Comme représentée aux figures 4 à 6, la clé de loquet 60 qui comporte une tige 62 d'axe vertical à l'extrémité inférieure de laquelle est agencé un panneton radial 64. La clé de loquet 60 comporte à son extrémité supérieure une poignée 66 d'actionnement.

La clé de loquet 60 est reçue pivotante autour de son axe vertical dans le trou de serrure 58 entre une position angulaire d'insertion dans laquelle la clé de loquet 60 est susceptible d'être extraite du trou de serrure 58 et une position angulaire d'emprisonnement dans laquelle la clé de loquet 60 ne peut pas être retirée du trou de serrure 58, c'est-à-dire qu'elle est prisonnière dans le verrou de loquet 42.

L'agencement comporte aussi un deuxième verrou d'interverrouillage 68 qui est susceptible d'être actionné entre un premier état d'interverrouillage lorsque la clé de loquet 60 est insérée dans le trou de serrure 58 du verrou de loquet 42 et dans lequel la clé de loquet 60 est bloquée dans sa position angulaire d'emprisonnement, et un deuxième état d'autorisation dans lequel la clé de loquet 60 est susceptible d'être pivotée entre ses deux positions angulaires.

Le deuxième verrou d'interverrouillage 68 présente une structure sensiblement identique à celle du verrou de loquet 42. Dans le mode de réalisation représenté aux figures 1 à 3, le deuxième verrou d'interverrouillage est agencé dans le boîtier 44 qui est ainsi commun aux deux verrous 42, 68.

Le deuxième verrou d'interverrouillage 68 est commandé par une clé mécanique amovible associée d'interverrouillage 70. A cet effet, la face supérieure d'insertion 46 du boîtier 44 comporte un deuxième trou de serrure 72.

La clé d'interverrouillage 70 est ainsi reçue pivotante dans le trou de serrure 72 associé entre une position angulaire d'interverrouillage dans laquelle le verrou d'interverrouillage 68 est dans son état d'interverrouillage et dans laquelle la clé d'interverrouillage 70 est susceptible d'être extraite du trou de serrure 72 associé, et une position angulaire d'autorisation dans laquelle le verrou d'interverrouillage 68 est dans son état d'autorisation et dans laquelle la clé d'interverrouillage 70 est prisonnière dans le trou de serrure 72 associé.

Les deux verrous 42, 68 forment ainsi un dispositif d'interverrouillage à échange de clés. Le fonctionnement et la structure d'un tel dispositif ne fait pas l'objet de l'invention et est décrit en détail dans le document FR-A1-2.882.082, page 15, ligne 17 jusqu'à la page 19, ligne 7.

Selon une variante non représentée de l'invention, le verrou d'interverrouillage 68 est commandé par un dispositif électromécanique ne nécessitant pas de clé mécanique.

Les boîtier 44 commun du premier et du deuxième verrous 42, 68 est fixé sur une plaque de support fixe 74 qui s'étend à proximité et parallèlement à un plan tangent à la face extérieure 16 du tronçon d'extrémité du conduit 10. La plaque de support 74 comporte plus particulièrement une face supérieure horizontale 76. La plaque de support 74 est agencée axialement en vis-à-vis de l'espace libre situé entre les deux oreilles 24A du raccord symétrique 22A du conduit 10.

La plaque de support 74 est fixé au conduit 10 par l'intermédiaire de deux demi-bride 78 qui forment un collier qui entoure la face cylindrique extérieure 16 du conduit 10. Les deux demi-brides 78 sont assemblé par l'intermédiaire de deux vis verticales 80.

Plus particulièrement, le deuxième verrou d'inter-verrouillage 68 est agencé transversalement à gauche du verrou de loquet 42 en référence aux figures 1 à 3.

L'agencement comporte aussi un bras rigide 82 formé par une lame coudée, comme illustré aux figures 4 à 6. Le bras rigide 82 comporte ainsi un premier tronçon d'extrémité arrière d'orientation axiale 84 et un deuxième tronçon d'extrémité avant d'orientation verticale 86 qui s'étend verticalement vers le bas depuis une extrémité avant du tronçon axial 84. Le tronçon axial 84 est ainsi relié au tronçon vertical 86 par l'intermédiaire d'un coude 88 intermédiaire à angle droit.

Le bras rigide 82 comporte aussi une nervure 90 qui s'étend vers le bas dans un plan vertical axial depuis la face inférieure horizontale 94 du tronçon axial 84 de manière à joindre la face inférieure 94 du tronçon axial 84 avec la face arrière du tronçon vertical 86. La nervure 90 s'étend axialement sur toute la longueur du tronçon axial 84, tandis qu'elle s'étend seulement sur une portion supérieure du tronçon vertical 86. La nervure 90 est agencée le long du bord d'extrémité transversal droit du tronçon axial 84 du bras rigide 82 de manière à former une cornière axiale, comme illustré à la figure 3.

La nervure 90 permet notamment d'accroître encore la rigidité du bras 82. Comme on le verra par la suite, la nervure 90 forme aussi un moyen de détrompage de manière que la clé de loquet 60 soit susceptible d'être insérée dans le trou de serrure 58 uniquement lorsque le bouchon 30 est dans sa position de bouchage par rapport au conduit 10.

La tige 62 de la clé de loquet 60 est montée pivotante autour de son axe d'orientation verticale sur une portion d'extrémité arrière 92 du premier tronçon axial 84. La clé de loquet 60 est avantageusement montée de manière indémontable sur le bras rigide 82.

De plus, la tige 62 de la clé de loquet 60 est montée coulissante verticalement par rapport au bras rigide 82 entre une position inférieure d'insertion dans laquelle le panneton 64 de la clé de loquet 60 est susceptible d'être inséré dans le trou de serrure 58 uniquement lorsque la face inférieure 94 du tronçon axial 84 du bras rigide 82 est plaquée contre la face supérieure d'insertion 46 du verrou de loquet 42, comme illustré à la figure 6, et une position supérieure d'extraction dans laquelle le panneton 64 de la clé de loquet 60 est rétractée dans un logement 96 de protection porté par le bras rigide 82 et qui est agencé au-dessus de la face inférieure 94 du tronçon axial 84, comme illustré à la figure 5. Ainsi, en position d'extraction, la clé de loquet 60 ne fait pas saillie verticalement vers le bas par rapport à la face inférieure 94 du tronçon axial 84 du bras rigide 82.

La face inférieure 94 sera par la suite appelée face d'appui 94 du premier tronçon axial 84 du bras rigide 82.

À cet effet, le tronçon axial 84 du bras rigide 82 comporte une fenêtre de passage 98 du panneton 64 qui est décalée transversalement vers la gauche par rapport à la nervure 90.

Le logement de protection 96 comporte une paroi supérieure horizontale 100 et des parois latérales 102 qui s'étendent verticalement vers le bas depuis le pourtour de la paroi horizontale.

La paroi supérieure horizontale 100 du logement de protection 96 comporte un orifice de passage 104 dans lequel la tige 62 de la clé de loquet 60 est montée coulissante et à rotation par rapport au bras rigide 82.

La clé de loquet 60 est rappelée élastiquement dans sa position supérieure d'extraction par un ressort 106 qui est intercalé entre la paroi supérieure horizontale 100 et la poignée supérieure 66 de la clé de loquet 60.

Le bouchon 30 est porté par une extrémité inférieure du tronçon vertical 86 du bras rigide 82. Le bouchon 30 est destiné à être immobilisé dans sa position de bouchage par le bras rigide 82 lorsque la clé de loquet 60 est dans sa position angulaire d'emprisonnement.

Le bouchon 30 est plus particulièrement monté à rotation autour de son axe de serrage afin de permettre la fixation à baïonnette du bouchon 30 sur le conduit 10 lorsque le bras de serrage 82 est immobilisé en position axiale de bouchage.

Plus précisément, le tronçon vertical 86 du bras rigide 82 s'étend axialement en vis-à-vis du centre de la face avant 108 du bouchon 30. Le tronçon vertical 86 du bras rigide 82 est aussi intercalé circonférentiellement entre deux pattes 38 du bouchon 30.

Une entretoise 112 cylindrique d'axe "C" réalisée en matériau élastomère est intercalée entre le tronçon vertical 86 du bras rigide 82 et la face avant du bouchon 30. Deux vis 110 axiales de fixation permettent de fixer l'entretoise 112 sur le bras rigide 82 d'une part, et le bouchon 30 sur l'entretoise d'autre part. L'entretoise 112 est déformable élastiquement de manière à conférer au bouchon 30 rotatif un jeu axial et radial par rapport au bras rigide 82.

Lorsqu'un utilisateur désire insérer la clé de loquet 60 dans le trou de serrure 48 du verrou de loquet 42, il est tout d'abord obligé d'orienter la tige 62 de la clé de loquet 60 verticalement. Puis, pour pouvoir insérer le panneton 64 de la clé de loquet 60 dans le trou de serrure 58, le bras rigide 82 doit être dans une position telle que le bouchon 30 occupe sa position de bouchage.

En effet, la nervure 90 du bras rigide 82 est agencée de telle façon que lorsque le bras rigide 82 occupe sa position de bouchage, la nervure 90 est appuyée à plat transversalement contre la face latérale droite 56 du verrou de loquet 42 et la face inférieure d'appui 94 du tronçon axial 84 est plaquée à plat contre la face supérieure d'insertion 46 du boîtier 44. Ainsi, la cornière formée par le tronçon axial 84 et la nervure 90 épouse l'arête axiale latérale droite du boîtier 44. Ladite cornière 90, 94 forme ainsi une zone de détrompage portée par le bras rigide 82 qui est conformée de manière à être emboîtée avec une zone de forme complémentaire formée par la face supérieure d'insertion 46 et la face latérale droite 56 du boîtier 44 uniquement lorsque le bouchon 30 occupe sa position axiale de bouchage.

Lorsque l'utilisateur agence le bras rigide 82 dans une position angulaire différente autour de l'axe vertical de la clé de loquet 60, la crête inférieure de la nervure 90 bute contre la face de supérieure 46 du verrou de loquet 42 pour empêcher la face inférieure d'appui 94 du tronçon axial 84 du bras rigide 82 d'être plaquée contre la face supérieure d'insertion 46 du verrou de loquet 42, empêchant ainsi l'insertion du panneton 64 de la clé de loquet 60 dans le trou de la serrure 58 associé.

Ceci est dû au fait que le trou de serrure 58 du verrou de loquet 42 est agencé plus près de la face latérale droite 56 du verrou de loquet 42 que de l'autre face latérale gauche 54 et que des faces transversales avant 50 et arrière 52.

Lors d'une opération de bouchage du conduit 10 d'accès, le bouchon 30 est d'abord agencé en vis-à-vis et à distance de la bouche 18 du conduit 10 dans sa position angulaire d'emboîtement, le tronçon axial 84 du bras rigide 82 étant agencé verticalement au-dessus du bouchon 30.

La clé d'interverrouillage 70 est emprisonnée dans sa position d'autorisation dans le trou de serrure 72 du verrou d'interverrouillage 68.

Puis, l'ensemble formé par le bras rigide 82 et le bouchon 30 est coulissé axialement vers l'arrière dans la position axiale de bouchage. Ce mouvement est guidé axialement par le glissement axial de la nervure 90 contre la face latérale droite 56 du verrou de loquet 42, et par le glissement de la face inférieure d'appui 94 du tronçon axial 84 contre la face supérieure d'insertion 46 du verrou de loquet 42. Le panneton 64 de la clé de loquet 60 ne gêne pas ce mouvement, car il est rétracté dans le logement de protection 96 du bras rigide 82.

Lorsque le bouchon 30 est dans sa position de bouchage, la tige 62 de la clé de loquet 60 est agencée verticalement en vis-à-vis du trou de serrure 58 du verrou de loquet 42. La clé de loquet 60 est alors coulissée vers le bas dans sa position en d'insertion, puis elle est pivotée dans sa position d'emprisonnement de manière à bloquer les déplacements du bras rigide 82 par rapport au conduit 10 dans un plan horizontal. Le bras rigide 82 est notamment immobilisé axialement.

Le bouchon 30 est alors pivoté dans sa position angulaire de serrage dans laquelle les doigts 34 sont insérés dans les rainures 26A des oreilles 24A du conduit 10 de manière à serrer axialement le bouchon 30 contre la bouche 18 par contact avec la paroi avant 28A de la rainure 26A. Le jeu axial du bouchon 30 par rapport au tronçon vertical 86 du bras rigide 82 permet au bouchon 30 de se rapprocher axialement du conduit 10 lors du serrage sans forcer sur le bras rigide 82 grâce à la déformation élastique de l'entretoise 112.

La clé d'interverrouillage 70 peut alors être pivotée dans sa position d'interverrouillage afin de bloquer la clé de loquet 60 dans sa position angulaire d'emprisonnement. La clé d'interverrouillage 70 peut alors être extraite du verrou d'interverrouillage 68 et ramenée à un tableau de consigne. Lorsque la clé d'interverrouillage 70 est présente sur le tableau de consigne, il est ainsi certain que le bouchon 30 est dans sa position de bouchage.

Selon une variante non représentée de l'invention, et en référence aux figures 1 à 6, la nervure de détrompage 90 est portée par le boîtier 44 du verrou de loquet 46 au lieu d'être portée par le bras rigide 82. Ainsi, la face supérieure d'insertion 46 du verrou de loquet 42 comporte une nervure 90 qui s'étend en saillie axialement en bordant partiellement par la gauche du trou de serrure 58.

La fenêtre de passage 98 de la clé de loquet 60 est agencé de manière excentrée transversalement vers la gauche dans le tronçon axial 84 du bras rigide 82 de manière que la distance transversale entre la fenêtre et l'axe de la clé de loquet 60 soit inférieure ou égale à la distance transversale entre la nervure 90 et le trou de serrure 58. En outre, la distance axiale entre l'extrémité axiale libre du tronçon axial 84 et la fenêtre 98 est supérieure à la distance axiale entre la fenêtre et le bord axial gauche.

Ainsi, la nervure 90 épouse le contour du premier tronçon 84 de manière que la face inférieure d'appui 94 du tronçon axial 84 ne peut être plaquée contre la face supérieure d'insertion 46 du verrou de loquet 42 que lorsque le bras rigide 82 occupe sa position de bouchage.

En effet, si le bras rigide 82, et donc le bouchon 30, occupe une autre position angulaire autour de l'axe vertical de la clé de loquet 60, la crête de la nervure 90 de détrompage bute contre la face inférieure d'appui 94 du tronçon axial 84 avant que la face inférieure d'appui 94 du tronçon axial 84 ne puisse être plaquée contre la face supérieure d'insertion 46 du verrou de loquet 42.

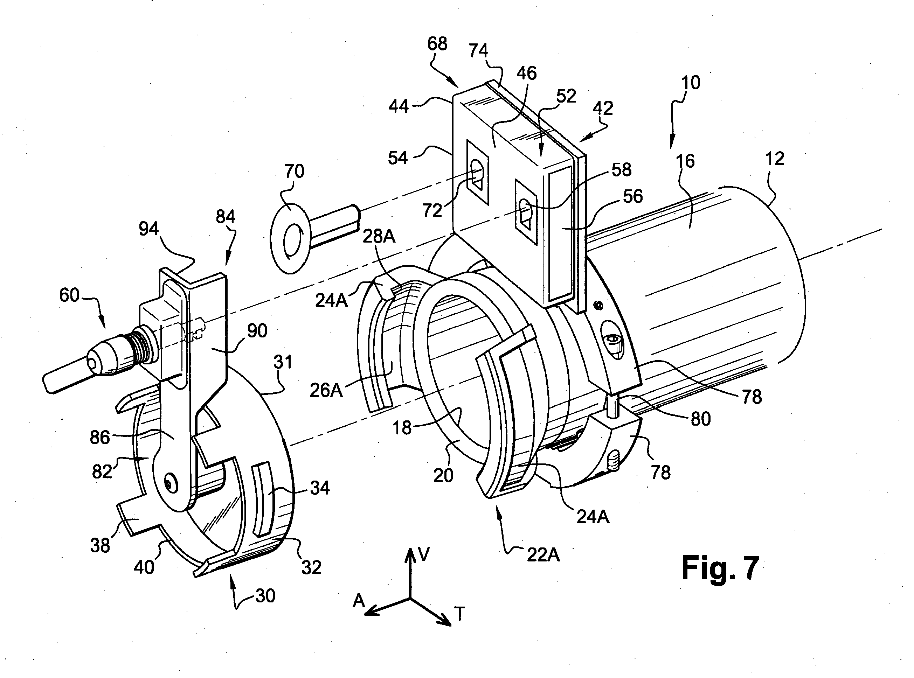

Selon un deuxième mode de réalisation de l'invention qui est représenté à la figure 7, la face d'insertion 46 du premier verrou de loquet 42 s'étend radialement par rapport à l'axe C du conduit 10. La face d'insertion 46 forme ainsi une face avant du boîtier 44.

Ainsi, le bras rigide 82 présente ici une forme rectiligne verticale. Le premier tronçon 84 portant la clé de loquet 60 est formé par un tronçon vertical d'extrémité supérieure du bras rigide 82, et le deuxième tronçon 86 portant le bouchon 30 est formé par un tronçon vertical d'extrémité inférieur du bras rigide 82.

La tige de la clé de loquet 60 est ainsi agencée selon un axe d'orientation axiale qui est parallèle à l'axe "C" du conduit 10.

Le trou de serrure 58 du verrou de loquet 42 est alors agencé verticalement au droit de l'axe "C" du conduit 10 à une distance égale à celle de l'entraxe de la clé de loquet 60 par rapport à l'axe "C" du bouchon 30.

Le premier tronçon d'extrémité supérieure 84 du bras rigide 82 comporte aussi une nervure 90 analogue à la nervure 90 décrite dans le premier mode de réalisation, de manière à former une cornière avec la face transversale arrière 94 du tronçon supérieur 84 du bras rigide 82.

Comme dans le premier mode de réalisation de l'invention, la dite cornière 90, 94 est susceptible d'être emboîtée sur la face avant d'insertion 46 et la face latérale 56 du boîtier 44 du verrou de loquet 42.

Ce deuxième mode de réalisation permet d'obtenir les mêmes avantages que le premier mode de réalisation de l'invention.

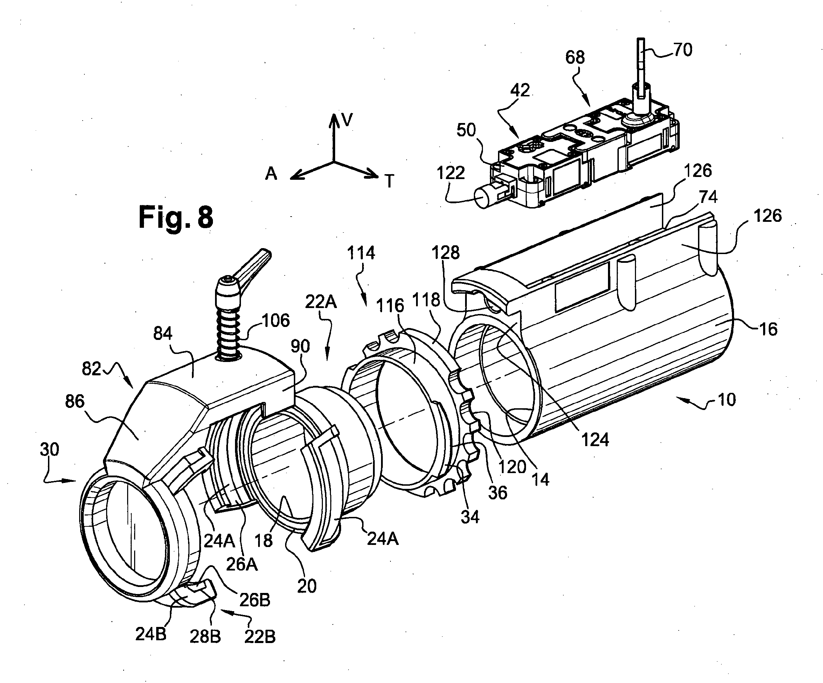

Selon un troisième mode de réalisation de l'invention qui est représentée aux figure 8 à 10, le bouchon 30 est équipé d'un raccord symétrique complémentaire 22B identique en forme et en dimensions au raccord symétrique 22A du conduit 10.

Par la suite, des éléments du raccord symétrique complémentaire 22B du bouchon 30 qui sont analogues en forme et en fonction à ceux du raccord symétrique 22A du conduit 10 auront le même numéro de référence suivi de la lettre "B" au lieu de la lettre "A".

Dans ce mode de réalisation de l'invention, le bouchon 30 est réalisé venu de matière avec le bras rigide 82.

Le conduit 10 est équipé d'une bague de serrage axial 114 qui est agencée axialement en arrière des oreilles 24A et de la bouche 18 du conduit 10.

La bague de serrage 114 comporte une face cylindrique extérieure 116 sur laquelle s'étendent radialement deux doigts opposés 34 analogues en apparence et en fonction à ceux qui ont été décrits pour le bouchon 30 du premier mode de réalisation. La bague de serrage 114 forme ainsi un moyen de fixation à baïonnette du bouchon 30 sur le conduit 10.

La bague de serrage 114 est monté à rotation autour de l'axe "C" du conduit 10 entre une position angulaire d'emboîtement dans laquelle les doigts opposés 34 sont alignés axialement avec les deux oreilles 24A du conduit 10 et une position angulaire de serrage axial dans laquelle les doigts 34 sont agencés circonférentiellement entre les deux oreilles 24A du conduit 10.

Cette bague de serrage 114 comporte aussi une collerette arrière 118 qui comporte des crans 120. Les crans 120 sont plus particulièrement agencés axialement en vis-à-vis des doigts 34.

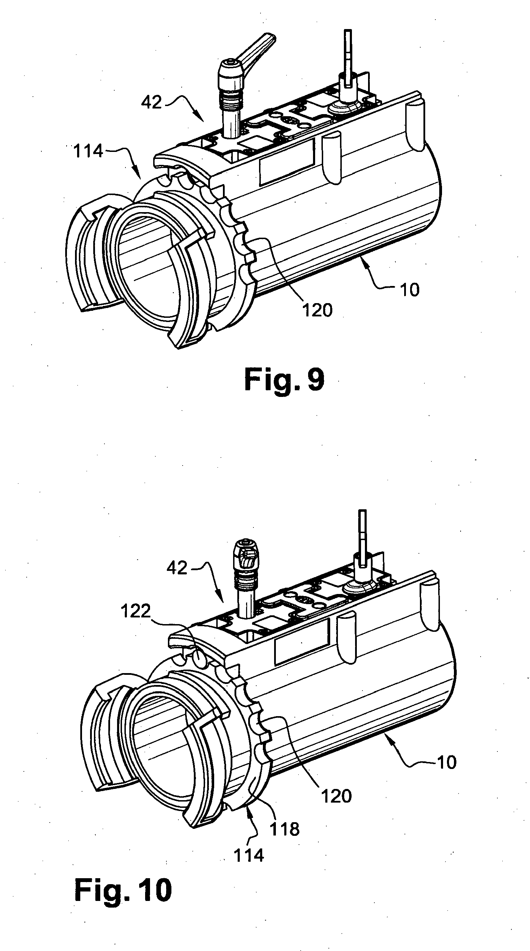

En outre, le verrou de loquet 46 comporte un pêne de loquet 122 d'orientation axiale qui est monté coulissant axialement à l'intérieur du boîtier 44 entre une position avant de verrouillage correspondant à la position angulaire d'emprisonnement de la clé de loquet 60 et dans laquelle une extrémité avant libre du pêne de loquet 122 fait saillie axialement vers l'avant par rapport à la face transversale avant 50 du boîtier 44 comme illustré aux figures 8 et 10, et une position arrière de déverrouillage correspondant à la position angulaire d'insertion de la clé de loquet 60 et dans laquelle l'extrémité avant libre du pêne de loquet 122 est rétractée vers l'arrière, comme illustré à la figure 9.

Aux figures 9 et 10, la clé de loquet 60 a été représentée seule, indépendamment du bras rigide 80, pour des raisons de clarté.

La structure et le fonctionnement de l'assemblage du verrou de loquet 46 et du verrou d'interverrouillage 68 est décrit plus en détails dans le document FR-A1-2.882.082, pages 6 à 12.

La plaque de support 74 tangentielle horizontale est réalisée venue de manière avec le conduit 10. La plaque de support 74 est ainsi formée par la face supérieure plane horizontale d'une protubérance qui s'étend verticalement vers le haut depuis une zone supérieure de la face cylindrique extérieure 16 du conduit 10, comme représenté à la figure 8.

La plaque de support 74 est ici entourée par une paroi transversale verticale d'extrémité axiale avant 124 et deux parois latérales 126 perpendiculaires à la paroi transversale 124 et parallèles entre elles qui délimitent ainsi un logement.

La paroi avant 124 du logement est décalée vers l'arrière par rapport au plan de la bouche 18 de manière à permettre l'emboîtement de l'oreille 24B associée du bouchon 30 sur le conduit 10.

La paroi avant 124 du logement comporte une lumière 128 pour permettre le passage du pêne de loquet 122 du premier verrou de loquet 42 vers sa position avant de verrouillage dans laquelle il fait saillie à travers la lumière 128 de la paroi avant 124 et dans laquelle il est susceptible d'être inséré axialement dans un cran 120 de la bague de serrage 114, comme représenté à la figure 10.

En outre, le pêne dans sa position avant de verrouillage, n'interfère pas avec les oreilles 24A du bouchon 30.

Le deuxième verrou d'interverrouillage 68 est agencé axialement en arrière du premier verrou de barrage 46

Lors de l'opération de bouchage du conduit 10, la clé d'interverrouillage 70 est emprisonnée dans sa position angulaire d'autorisation dans le verrou d'interverrouillage 68. Le pêne de loquet 122 est dans sa position arrière de déverrouillage dans laquelle il n'est pas inséré dans un cran 120 de la bague de serrage 114. La bague de serrage 114 est ainsi libre de pivoter.

Le bouchon 30 est agencé axialement en avant et en vis-à-vis de la bouche 18 de manière que les oreilles 24B du raccord symétrique complémentaire 22B soient agencées circonférentiellement entre les oreilles 24A du raccord symétrique 22A du conduit 10.

La bague de serrage est pivotée dans sa position angulaire d'emboîtement. En position angulaire d'emboîtement de la bague de serrage 114, le déplacement du pêne de loquet 122 vers sa position avant de verrouillage est bloqué par la collerette 118.

Puis le bouchon 30 est déplacé axialement vers sa position axiale de bouchage. Ce mouvement est guidé axialement par le glissement axial de la nervure 90 contre la paroi latérale droite 126 du logement du verrou de loquet 42, et par le glissement de la face inférieure d'appui 94 du tronçon axial 84 contre la face supérieure d'insertion 46 du verrou de loquet 42. Le panneton 64 de la clé de loquet 60 ne gêne pas ce mouvement, car il est rétracté dans le logement de protection 96 du bras rigide 82.

Dans cette position, comme représenté à la figure 2, les oreilles 24B du bouchon 30 embrassent verticalement la bouche 18 du conduit 10, tandis que les oreilles 24A du conduit 10 embrassent transversalement le bouchon 30.

Dans cette position les rainures 26B des oreilles 24B du conduit 10 sont agencées radialement en vis-à-vis du tronçon avant de la bague de serrage 114.

La bague de serrage 114 est ensuite tournée d'un quart de tour dans un sens horaire vers sa position de serrage, au besoin en s'aidant d'une clé de serrage. Lors de la rotation de la bague de serrage 114, les doigts 34 s'engagent dans les rainures 26A des oreilles 24A du conduit 10. La face radiale arrière 36 des doigts 34 entre en contact avec la face arrière 28B des rainures 26B de manière à serrer axialement le bord 20 de la bouche 18 contre le bouchon 30. Le conduit 10 est ainsi bouché de manière étanche.

La tige 62 de la clé de loquet 60 est alors agencée verticalement en vis-à-vis du trou de serrure 58 du verrou de loquet 42. La clé de loquet 60 est alors coulissée vers le bas dans sa position d'insertion, puis elle est pivotée dans sa position d'emprisonnement.

Le pêne de loquet 122 est alors commandé dans sa position avant de verrouillage en étant inséré dans un cran 120 de la bague de serrage 114 de manière à empêcher le pivotement de la bague de serrage 114. Le bouchon 30 est donc bloqué dans sa position serrée axialement.

La clé d'interverrouillage 70 peut alors être pivotée dans sa position d'interverrouillage afin de bloquer la clé de loquet 60 dans sa position angulaire d'emprisonnement. La clé d'interverrouillage 70 peut alors être extraite du verrou d'interverrouillage 68 et ramenée à un tableau de consigne. Lorsque la clé d'interverrouillage 70 est présente sur le tableau de consigne, il est ainsi certain que le bouchon 30 est dans sa position de bouchage.

L'agencement de verrouillage réalisé selon les enseignements de l'invention permet ainsi d'être certain que le conduit 10 est bouché par le bouchon 30 lorsqu'un utilisateur rapporte la clé d'interverrouillage 70 associée.

De plus, le troisième mode de réalisation permet d'être sûr que le bouchon 30 est serré axialement contre la bouche 18 du conduit 10 de manière étanche lorsque la clé d'interverrouillage 70 est extraite du verrou d'interverrouillage 68.

## Revendications

1. Agencement pour le verrouillage d'un bouchon (30) dans une position axiale de bouchage d'une bouche (18) d'extrémité avant de sortie d'un conduit (10) axial,
**caractérisé en ce qu'**il comporte :
- le bouchon (30); -le conduit (10);
- un premier verrou de loquet (42) qui est fixe par rapport au conduit et qui comporte une face d'insertion (46) ajourée d'un trou de serrure (58) associé ;
- une clé de loquet (60) qui est susceptible d'être insérée dans le trou de serrure (58) du verrou de loquet (42) pour être pivotée entre une position angulaire d'insertion dans laquelle la clé de loquet (60) est susceptible d'être extraite du trou de serrure (58), et une position angulaire d'emprisonnement dans laquelle la clé de loquet (42) est prisonnière dans le trou de serrure (58) ;
- un bras rigide (82) qui comporte un premier tronçon (84) dans lequel la clé de loquet (60) est montée pivotante autour de son axe, et qui comporte un deuxième tronçon (86) qui porte le bouchon (30),
et **en ce que** le bouchon (30) est immobilisé dans sa position de bouchage par le bras rigide (82) lorsque la clé de loquet (60) est dans sa position angulaire d'emprisonnement.

2. Agencement selon la revendication précédente, **caractérisé en ce que** le bras rigide (82) comporte des moyens de détrompage (90, 94) de manière que la clé de loquet (60) soit susceptible d'être insérée dans le trou de serrure (58) uniquement lorsque le bouchon (30) est dans sa position de bouchage par rapport au conduit (10).

3. Agencement selon la revendication précédente, **caractérisé en ce que** le bras rigide (82) présente une zone de détrompage (90, 94) qui est conformée de manière à être emboîtée avec une zone de forme complémentaire (46, 56) fixe par rapport au conduit (10) uniquement lorsque le bouchon (30) occupe sa position axiale de bouchage.

4. Agencement selon la revendication précédente, **caractérisé en ce que** la clé de loquet (60) est susceptible d'être insérée dans le trou de serrure (58) uniquement lorsqu'une face d'appui (94) du premier tronçon (84) est en appui plan sur la face d'insertion (46) du premier verrou de loquet (42).

5. Agencement selon la revendication précédente, **caractérisé en ce que** le boîtier (44) est délimité transversalement par rapport à l'axe d'insertion de la clé de loquet (60) par une face proximale latérale (56) et une face distale latérale (54), et **en ce que** le premier tronçon (84) du bras rigide (82) comporte une nervure (90) qui s'étend perpendiculairement à la face d'insertion (46) du boîtier (44) de manière que, en position axiale de bouchage du bouchon (30), la nervure (90) soit transversalement en appui contre la face latérale proximale (56), et de manière que dans une autre position angulaire du bouchon (30) autour de l'axe de clé, une crête de la nervure (90) bute contre la face d'insertion (46) du boîtier (44) pour empêcher que la face d'appui (94) du premier tronçon (84) soit en appui contre la face d'insertion (46) du boîtier (44).

6. Agencement selon la revendication 4, **caractérisé en ce que** la face d'insertion (46) du boîtier (44) comporte au moins une saillie (90) qui borde partiellement le trou de serrure (58) et qui épouse sensiblement le contour du premier tronçon (84) de manière que la face d'appui (94) du premier tronçon (84) soit susceptible d'être en appui contre la face d'insertion (46) du boîtier (44) uniquement lorsque le bouchon (30) est dans sa position axiale de bouchage, et de manière que dans une autre position angulaire du bouchon (30) autour de l'axe de clé, la saillie (90) soit en contact avec la face d'appui (94) du premier tronçon (84) pour empêcher que la face d'appui (94) du premier tronçon (84) soit en appui contre la face d'insertion (46) du boîtier (44).

7. Agencement selon l'une quelconque des revendications précédentes, **caractérisé en ce qu'**il comporte un deuxième verrou d'interverrouillage (68) qui est susceptible d'être actionné entre un premier état d'interverrouillage dans lequel la clé de loquet (60) du premier verrou de loquet (42) est bloquée dans sa position angulaire d'emprisonnement, et un deuxième état d'autorisation dans lequel la clé de loquet (60) du premier verrou de loquet (42) est libre d'être pivotée en ses deux positions angulaires.

8. Agencement selon l'une quelconque des revendications précédentes, **caractérisé en ce que** la bouche (18) du conduit (10) est équipée d'un raccord symétrique (22A), notamment du type raccord Guillemin, le bouchon (30) comportant des moyens de serrage axial à baïonnettes (34) sur le raccord symétrique (22A) de la bouche (18) par pivotement du bouchon (30) en position axiale de bouchage autour d'un axe de serrage (C) entre une position angulaire d'emboîtement et une position angulaire de serrage.

9. Agencement selon la revendication précédente, **caractérisé en ce que** le bouchon (30) est monté pivotant sur le bras rigide (82) autour de son axe de serrage (C) de manière à permettre la fixation à baïonnette du bouchon (30) sur le (10) conduit lorsque le bras rigide (82) est immobilisé.

10. Agencement selon l'une quelconque des revendications 1 à 7, **caractérisé en ce que** la bouche (18) du conduit (10) est équipée de moyens de raccord symétrique (22A), notamment du type raccord Guillemin, comprenant une bague de serrage (114) qui est destinée à coopérer avec des oreilles latérales (24B) du bouchon (30) pour le serrer axialement contre la bouche (18) par pivotement de la bague (114) autour d'un axe de serrage (C) depuis une position angulaire d'insertion jusqu'à une position angulaire de serrage.

11. Agencement selon la revendication précédente, **caractérisé en ce que** le premier verrou de loquet (42) comporte un pêne de loquet (122) qui est mobile en translation entre une position de verrouillage lorsque la clé de loquet (60) est dans sa position angulaire d'emprisonnement et dans laquelle le pêne de loquet (122) est susceptible de limiter le pivotement de la bague de serrage (114) lorsqu'elle est en position de serrage, et une position de déverrouillage lorsque la clé de loquet (60) est dans sa position d'insertion et dans laquelle la bague de serrage (114) est libre d'être pivotée.

12. Agencement selon la revendication précédente, **caractérisé en ce que** la bague de serrage (114) comporte une collerette (118) de blocage du pêne de loquet (122) qui est agencée en vis-à-vis du pêne de loquet (122) lorsque le bouchon (30) est dans une position angulaire d'emboîtement afin d'empêcher le pivotement de la clé vers sa position angulaire d'emprisonnement tant que la bague de serrage (114) n'est pas dans sa position angulaire de serrage.

13. Agencement selon l'une quelconque des revendications précédentes, **caractérisé en ce que** la face d'insertion (46) du premier verrou de loquet (42) s'étend parallèlement à un plan tangentiel au conduit (10).

14. Agencement selon l'une quelconque des revendications 1 ou 2, **caractérisé en ce que** la face d'insertion (46) du premier verrou de loquet (42) s'étend radialement par rapport à l'axe (C) du conduit (10).

## Patentansprüche

1. Anordnung zur Verriegelung eines Stopfens (30) in einer axialen Position des Verschließens eines vorderen Mündungsendstücks (18) am Austritt einer axialen Leitung (10),
**dadurch gekennzeichnet, dass** sie aufweist:
- den Stopfen (30);
- die Leitung (10);
- ein erstes Fallenschloss (42), welches bezüglich der Leitung feststehend ist und welches eine Einsteckfläche (46) aufweist, die von einem zugehörigen Schlüsselloch (58) durchbrochen ist;
- einen Fallenschlüssel (60), welcher in das Schlüsselloch (58) des Fallenschlosses (42) einsteckbar ist, um zwischen einer Einsteck-Winkelposition, in welcher der Fallenschlüssel (60) aus dem Schlüsselloch (58) herausziehbar ist, und einer Festhalte-Winkelposition, in welcher der Fallenschlüssel (60) in dem Schlüsselloch (58) festgehalten wird, geschwenkt zu werden;
- einen starren Arm (82), welcher einen ersten Abschnitt (84) aufweist, in welchem der Fallenschlüssel (60) um seine Achse schwenkbar angebracht ist, und welcher einen zweiten Abschnitt (86) aufweist, welcher den Stopfen (30) trägt,
und dadurch, dass der Stopfen (30) in seiner Verschließposition durch den starren Arm (82) fixiert ist, wenn sich der Fallenschlüssel (60) in seiner Festhalte-Winkelposition befindet.

2. Anordnung nach dem vorhergehenden Anspruch, **dadurch gekennzeichnet, dass** der starre Arm (82) Unverwechselbarkeitsmittel (90, 94) aufweist, derart, dass der Fallenschlüssel (60) nur dann in das Schlüsselloch (58) einsteckbar ist, wenn sich der Stopfen (30) in seiner Verschließposition bezüglich der Leitung (10) befindet.

3. Anordnung nach dem vorhergehenden Anspruch, **dadurch gekennzeichnet, dass** der starre Arm (82) einen Unverwechselbarkeitsbereich (90, 94) aufweist, welcher derart gestaltet ist, dass er mit einem bezüglich der Leitung (10) feststehenden Bereich von komplementärer Form (46, 56) nur dann zusammengefügt werden kann, wenn der Stopfen (30) seine axiale Verschließposition einnimmt.

4. Anordnung nach dem vorhergehenden Anspruch, **dadurch gekennzeichnet, dass** der Fallenschlüssel (60) nur dann in das Schlüsselloch (58) einsteckbar ist, wenn eine Anlagefläche (94) des ersten Abschnitts (84) flach an der Einsteckfläche (46) des ersten Fallenschlosses (42) anliegt.

5. Anordnung nach dem vorhergehenden Anspruch, **dadurch gekennzeichnet, dass** das Gehäuse (44) in Querrichtung bezüglich der Einsteckachse des Fallenschlüssels (60) durch eine proximale Seitenfläche (56) und eine distale Seitenfläche (54) begrenzt ist, und dadurch, dass der erste Abschnitt (84) des starren Armes (82) eine Rippe (90) aufweist, welche sich senkrecht zu der Einsteckfläche (46) des Gehäuses (44) erstreckt, derart, dass in der axialen Verschließposition des Stopfens (30) die Rippe (90) in Querrichtung an der proximalen Seitenfläche (56) anliegt, und derart, dass in einer anderen Winkelposition des Stopfens (30) um die Schlüsselachse ein Kamm der Rippe (90) an die Einsteckfläche (46) des Gehäuses (44) anstößt, um zu verhindern, dass die Anlagefläche (94) des ersten Abschnitts (84) an der Einsteckfläche (46) des Gehäuses (44) zur Anlage kommt.

6. Anordnung nach Anspruch 4, **dadurch gekennzeichnet, dass** die Einsteckfläche (46) des Gehäuses (44) wenigstens einen Vorsprung (90) aufweist, welcher das Schlüsselloch (58) teilweise umrandet und welcher sich im Wesentlichen an die Kontur des ersten Abschnitts (84) anschmiegt, derart, dass die Anlagefläche (94) des ersten Abschnitts (84) nur dann an der Einsteckfläche (46) des Gehäuses (44) anliegen kann, wenn sich der Stopfen (30) in seiner axialen Verschließposition befindet, und derart, dass in einer anderen Winkelposition des Stopfens (30) um die Schlüsselachse der Vorsprung (90) sich in Kontakt mit der Anlagefläche (94) des ersten Abschnitts (84) befindet, um zu verhindern, dass die Anlagefläche (94) des ersten Abschnitts (84) an der Einsteckfläche (46) des Gehäuses (44) anliegt.

7. Anordnung nach einem der vorhergehenden Ansprüche, **dadurch gekennzeichnet, dass** sie ein zweites Verriegelungsschloss (68) aufweist, welches zwischen einem ersten Verriegelungszustand, in welchem der Fallenschlüssel (60) des ersten Fallenschlosses (42) in seiner Festhalte-Winkelposition blockiert ist, und einem zweiten Freigabezustand, in welchem der Fallenschlüssel (60) des ersten Fallenschlosses (42) frei in seine zwei Winkelpositionen schwenken kann, betätigt werden kann.

8. Anordnung nach einem der vorhergehenden Ansprüche, **dadurch gekennzeichnet, dass** die Mündung (18) der Leitung (10) mit einem symmetrischen Anschlussstück (22A), insbesondere vom Typ einer Guillemin-Kupplung, ausgestattet ist, wobei der Stopfen (30) Mittel zum axialen Spannen mit Bajonettbefestigung (34) an dem symmetrischen Anschlussstück (22A) der Mündung (18) durch Schwenken des Stopfens (30) in der axialen Verschließposition um eine Spannachse (C) zwischen einer Eingreif-Winkelposition und einer Spann-Winkelposition aufweist.

9. Anordnung nach dem vorhergehenden Anspruch, **dadurch gekennzeichnet, dass** der Stopfen (30) an dem starren Arm (82) um seine Spannachse (C) schwenkbar angebracht ist, um die Bajonettbefestigung des Stopfens (30) an der Leitung (10) zu ermöglichen, wenn der starre Arm (82) fixiert ist.

10. Anordnung nach einem der Ansprüche 1 bis 7, **dadurch gekennzeichnet, dass** die Mündung (18) der Leitung (10) mit symmetrischen Anschlussmitteln (22A), insbesondere vom Typ einer Guillemin-Kupplung, ausgestattet ist, die einen Spannring (114) aufweisen, welcher dazu bestimmt ist, mit seitlichen Lappen (24B) des Stopfens (30) zusammenzuwirken, um ihn durch Schwenkung des Spannringes (114) um eine Spannachse (C) aus einer Einsteck-Winkelposition bis zu einer Spann-Winkelposition axial gegen die Mündung (18) zu spannen.

11. Anordnung nach dem vorhergehenden Anspruch, **dadurch gekennzeichnet, dass** das erste Fallenschloss (42) einen Sperrbolzen (122) aufweist, welcher translatorisch bewegbar ist zwischen einer Verriegelungsposition, wenn sich der Fallenschlüssel (60) in seiner Festhalte-Winkelposition befindet und in welcher der Sperrbolzen (122) dazu eingerichtet ist, die Schwenkung des Spannringes (114) zu begrenzen, wenn dieser sich in der Spannposition befindet, und einer Entriegelungsposition, wenn sich der Fallenschlüssel (60) in seiner Einsteckposition befindet und in welcher der Spannring (114) frei schwenkbar ist.

12. Anordnung nach dem vorhergehenden Anspruch, **dadurch gekennzeichnet, dass** der Spannring (114) einen Kragen (118) zur Blockierung des Sperrbolzens (122) aufweist, welcher gegenüber dem Sperrbolzen (122) angeordnet ist, wenn sich der Stopfen (30) in einer Eingreif-Winkelposition befindet, um das Schwenken des Schlüssels in seine Festhalte-Winkelposition zu verhindern, solange sich der Spannring (114) nicht in seiner Spann-Winkelposition befindet.

13. Anordnung nach einem der vorhergehenden Ansprüche, **dadurch gekennzeichnet, dass** sich die Einsteckfläche (46) des ersten Fallenschlosses (42) parallel zu einer zu der Leitung (10) tangentialen Ebene erstreckt.

14. Anordnung nach einem der Ansprüche 1 oder 2, **dadurch gekennzeichnet, dass** sich die Einsteckfläche (46) des ersten Fallenschlosses (42) radial bezüglich der Achse (C) der Leitung (10) erstreckt.

## Claims

1. Arrangement for locking a plug (30) in an axial position in which it plugs a front end mouth (18) of an outlet of an axial conduit (10), **characterized in that** it comprises:
- the plug (30);
- the conduit (10);
- a first latch lock (42) which is fixed with respect to the conduit and which comprises an insertion face (46) provided with an associated keyhole (58);
- a latch key (60) which can be inserted into the keyhole (58) of the latch lock (42) in order to be pivoted between an angular insertion position in which the latch key (60) can be extracted from the keyhole (58), and an angular entrapment position in which the latch key (60) is entrapped in the keyhole (58);
- a rigid arm (82) which comprises a first section (84) in which the latch key (60) is pivotably mounted about its axis, and which comprises a second section (86) which bears the plug (30),
and **in that** the plug (30) is immobilized in its plugging position by the rigid arm (82) when the latch key (60) is in its angular entrapment position.

2. Arrangement according to the preceding claim, **characterized in that** the rigid arm (82) comprises foolproofing means (90, 94) such that the latch key (60) can be inserted into the keyhole (58) only when the plug (30) is in its plugging position with respect to the conduit (10).

3. Arrangement according to the preceding claim, **characterized in that** the rigid arm (82) has a foolproofing region (90, 94) which is configured so as to fit with a region (46, 56) of complementary shape fixed with respect to the conduit (10) only when the plug (30) occupies its axial plugging position.

4. Arrangement according to the preceding claim, **characterized in that** the latch key (60) can be inserted into the keyhole (58) only when a bearing face (94) of the first section (84) bears flat against the insertion face (46) of the first latch lock (42).

5. Arrangement according to the preceding claim, **characterized in that** the housing (44) is delimited transversally with respect to the insertion axis of the latch key (60) by a lateral proximal face (56) and a lateral distal face (54), and **in that** the first section (84) of the rigid arm (82) comprises a rib (90) which extends perpendicularly to the insertion face (46) of the housing (44) such that, in the axial plugging position of the plug (30), the rib (90) bears transversally against the proximal lateral face (56), and such that, in another angular position of the plug (30) about the key axis, a ridge of the rib (90) butts against the insertion face (46) of the housing (44) in order to prevent the bearing face (94) of the first section (84) from bearing against the insertion face (46) of the housing (44).

6. Arrangement according to Claim 4, **characterized in that** the insertion face (46) of the housing (44) comprises at least one projection (90) which partially borders the keyhole (58) and which substantially hugs the contour of the first section (84) such that the bearing face (94) of the first section (84) can bear against the insertion face (46) of the housing (44) only when the plug (30) is in its axial plugging position, and such that, in another angular position of the plug (30) about the key axis, the projection (90) is in contact with the bearing face (94) of the first section (84) so as to prevent the bearing face (94) of the first section (84) from bearing against the insertion face (46) of the housing (44).

7. Arrangement according to any one of the preceding claims, **characterized in that** it comprises a second inter-locking lock (68) which can be actuated between a first inter-locking state in which the latch key (60) of the first latch lock (42) is immobilized in its angular entrapment position, and a second authorization state in which the latch key (60) of the first latch lock (42) is free to be pivoted into its two angular positions.

8. Arrangement according to any one of the preceding claims, **characterized in that** the mouth (18) of the conduit (10) is equipped with a symmetrical connector (22A), in particular of the Guillemin connector type, the plug (30) comprising axial clamping means with bayonets (34) for clamping onto the symmetrical connector (22A) of the mouth (18) by pivoting the plug (30) in the axial plugging position about a clamping axis (C) between an angular fitting position and an angular clamping position.

9. Arrangement according to the preceding claim, **characterized in that** the plug (30) is pivotably mounted on the rigid arm (82) about its clamping axis (C) so as to allow the bayonet-type fastening of the plug (30) on the conduit (10) when the rigid arm (82) is immobilized.

10. Arrangement according to any one of Claims 1 to 7, **characterized in that** the mouth (18) of the conduit (10) is equipped with symmetrical connector means (22A), in particular of the Guillemin connector type, comprising a clamping ring (114) which is intended to cooperate with lateral lugs (24B) of the plug (30) in order to clamp it axially against the mouth (18) by pivoting the ring (114) about a clamping axis (C) from an angular insertion position to an angular clamping position.

11. Arrangement according to the preceding claim, **characterized in that** the first latch lock (42) comprises a latch bolt (122) which can move translationally between a locking position when the latch key (60) is in its angular entrapment position and in which the latch bolt (122) can limit the pivoting movement of the clamping ring (114) when it is in the clamping position, and an unlocking position when the latch key (60) is in its insertion position and in which the clamping ring (114) is free to be pivoted.

12. Arrangement according to the preceding claim, **characterized in that** the clamping ring (114) comprises a collar (118) for immobilizing the latch bolt (122), which collar is arranged opposite the latch bolt (122) when the plug (30) is in an angular fitting position in order to prevent the key from pivoting towards its angular entrapment position while the clamping ring (114) is not in its angular clamping position.

13. Arrangement according to any one of the preceding claims, **characterized in that** the insertion face (46) of the first latch lock (42) extends parallel to a plane tangential to the conduit (10).

14. Arrangement according to either one of Claims 1 and 2, **characterized in that** the insertion face (46) of the first latch lock (42) extends radially with respect to the axis (C) of the conduit (10).
